# EUROPÄISCHE PATENTSCHRIFT

(11) **EP 1 379 907 B1**
(45) Veröffentlichungstag und Bekanntmachung des Hinweises auf die Patenterteilung: **20.08.2008**
(21) Anmeldenummer: 02732554.7
(22) Anmeldetag: 04.04.2002
(51) Int. Cl.: G02B 21/22, G02B 21/00

(54) **MIKROSKOP MIT EINER EIN- UND/ODER AUSSPIEGELUNG VON BILDDATEN MIT ZUSÄTZLICHEN BLENDEN**
MICROSCOPE FOR INWARDLY OR OUTWARDLY REFLECTING IMAGE DATA PROVIDED WITH ADDITIONAL DIAPHRAGMS
MICROSCOPE A REFLEXION EN ENTREE OU EN SORTIE DE DONNEES D'IMAGE POURVU DE DIAPHRAGMES SUPPLEMENTAIRES

(30) Priorität: 12.04.2001 DE 10118702
(43) Veröffentlichungstag der Anmeldung: 14.01.2004
(73) Patentinhaber: Leica Microsystems (Schweiz) AG, 9435 Heerbrugg (CH)
(72) Erfinder: MANNSS, Jürgen, CH-3672 Oberdiessbach (CH); SPINK, Roger, CH-9442 Berneck (CH); MOSER, Benno, CH-9442 Berneck (CH)
(74) Vertreter: Rosenich, Paul
(86) Internationale Anmeldenummer: PCT/EP2002/003749
(87) Internationale Veröffentlichungsnummer: WO 2002/084366

(56) Entgegenhaltungen:
- EP-A- 0 712 600
- EP-A- 0 928 981
- WO-A-00/68724
- DE-A- 10 021 063
- PATENT ABSTRACTS OF JAPAN vol. 2000, no. 19, 5. Juni 2001 (2001-06-05) & JP 2001 046399 A (OLYMPUS OPTICAL CO LTD), 20. Februar 2001 (2001-02-20)

## Beschreibung

Die Erfindung betrifft ein Mikroskop, belsplelsweise ein (Stereo-) Operationsmikroskop, mit einer zusätzlichen Blende in einem Hauptstrahlengang zur Zu-, bzw. Wegschaltung des Betrachters, ohne Beeinflussung des ausgespiegelten Signals.

Das Aus- und Einblenden mittels Ein- und Ausspiegel-Vorrichtungen wird in vielen Bereichen mehr und mehr angewandt, da eingespiegelte Informationen in das Beobachtungsfeld optischer Systeme zu einem erheblichen informationsgewinn für den Anwender führen. Ausspiegelungen von Abbildungen des Objektes werden angewandt, um Objekt-Informationen entweder einem weiteren Beobachter, beispieisweise einem Operations-Assistenten zuzuführen oder in eine Bildverarbeitungseinheit, beispielsweise ein Video-System einzuspeisen. Typischerweise erfolgen die Ein- und Ausspiegelungen mittels Strahlenteilern im Hauptstrahlengang.

Um nun dem Anwender die Möglichkeit zu geben, zu entscheiden, ob das Beobachtungsfeld und/oder ausschließlich das eingespiegelte Bild betrachtet werden soll, werden Blenden, sogenannte Shutter, zum Ein- und Ausschalten der Objekt-Abbildung verwendet. Diese werden bei den heute bekannten Vorrichtungen im jeweiligen Hauptstrahlengang zwischen dem Objektiv und dem entsprechenden Strahlenteiler positioniert.

Die Blenden sind konstruktiv so aufgebaut, dass drei Betrachtungs-Zustände erreicht werden können (jeweils ein Strahlengang betrachtet):
- Blick auf Objekt
- Blick auf Objekt gemeinsam mit dem eingespiegelten Bild
- Ausschließlich eingesplegeltes Bild

Zusätzlich kann bei den heute bekannten Blenden In der Regel nicht sichergesteilt werden, dass bei Bedarf mittels eines Handgriffs innerhalb kürzester Zeit auf einfachem Wege der Grundzustand abgebildet wird, d. h. die gesamte Objektabbildung in beiden Strahlengängen erscheint.

Derartige system sind beispielsweize in EP0928981, EP0712600. DE10021063 oder WO00/68724 beschriben.

Der Erfinder erkannte, dass die bekannten Systeme nachteilig sind in Bezug auf die folgenden Punkte:
a) Beim Schließen der Blende Im Hauptstrahlengang, In welchem die Ausspiegelung abgetrennt wird, wird ein eventueller Mitbeobachter und/oder eine Bildverarbeitungs-Einheit, z.B. ein Video-System ausgeschaltet, da durch das Schließen der Blende gleichzeitig auch das Ausspiegelungssystem von seiner Bildquelle (Objekt) getrennt wird.
b) Eine Koppelung von Aus- und Einspiegelung, beispielsweise das Einblenden des ausgekoppelten Bildes, ist nicht in allen der drei vorgenannten Zustände möglich.
c) Die heute verwendeten Blenden In einem Stereomikroskop haben keine Möglichkeiten, innerhalb kürzester Zeit, beispielsweise bei einem Notfall (auch bei Totalausfall der Blendensteuerung), die Sicht beider Augen des Chirurgen auf das Objekt freizugeben.
d) Die heutigen Einspiegelungs-Vorrichtungen weisen nur eine ungenügende Möglichkeit auf, zwischen originalen und/oder videogestützten Objektdarstellungen und/oder rechnerisch erzeugten Einspiegelungen umzustellen.

Der Erfindung liegen somit als Aufgaben zugrunde, eine Einrichtung zur Einund -Ausspiegelung von Bilddaten zu schaffen, weiche die angegebenen Nachteile vermeidet, unabhängig davon, welche Kombinationen von Ein- und Ausspiegelungen, resp. Objektabbildungen verwendet werden. Zusätzlich sollen die konstruktiven Merkmale der verwendeten Blenden vereinfacht, sowie innert kürzester Zeit eine Zuschaltung des Objekt-Abbildes in beide Strahlengängen ermöglicht werden.

Gelöst werden diese Aufgaben alternativ durch
i) das Einsetzen einer Blende Im Hauptstrahlengang zwischen Ausspiegelungs-Strahlenteiler und Betrachter-Qkular und/oder durch eine Weiterentwicklung oder davon unabhängig einsetzbare Alternative.
ii) das Einsetzen einer Blende im ausgespiegelten Strahlengang und/oder durch eine Weiterentwicklung oder davon unabhängig einsetzbare Alternative.
iii) die Möglichkeit, zwischen einem elektronisch erzeugten Einspiegelungs-Signal und einem beliebigen Video-Signal umzuschalten und/oder durch eine Weiterentwicklung oder davon unabhängig einsetzbare Alternative.
iv) den Einsatz einer Blenden-Konstruktion mit Override-Funktion.

Blenden im Hauptstrahlengang zwischen Strahlenteiler und Betrachter-Okular und/oder im ausgespiegelten Strahlengang sind hinsichtlich der verschiedenen neuen Möglichkeiten, Kombinationen von Objektabbild, Ausspiegelung und Einspiegelung zu erzeugen, unabhängig von den übrigen angegebenen Merkmalen einsetzbar.

Zwei getrennte, umschaltbare oder In Kombination verwendete Einspiegelungsquallen (rechnerisch erzeugtes Signal/videogestütztes Objektabbild) sind hinsichtlich derzusätzllchen Informationen Im Bildfeld des Betrachters unabhängig von den übrigen angegebenen Merkmalen einsetzbar.

Eine Blende mit Override-Funktion (Quick-Reset) ist hinsichtlich der besonders schnellen und einfachen Rücksatzbarkeit In den Zustand freier Sicht auf das Objekt unabhängig von den übrigen angegebenen Merkmalen einsetzbar.

Mit den genannten Maßnahmen können in folgenden Schritten die nachstehenden Verbesserungen erreicht werden:
• Durch den Einsatz einer Blende im Hauptstrahlengang zwischen Ausspiegelungs-Strahlenteller und Betrachter-Okular wird das ausgespiegelte Signal nicht beeinflusst, unabhängig davon, ob der Betrachter, beispielsweise ein Chirurg, das Objekt direkt betrachtet oder nicht.
• Durch den Einsatz einer Blende im Ausspiegelungs-Strahlengang wird die Objektabbildung für den Betrachter nicht beeinflusst, unabhängig davon, ob der ausgespiegelte Strahlengang weg- oder zugeschaltet ist.
• Im Falle eines Einspiegeiungs-Strahlenganges zur Einspiegeiung von Informationen in den Ausspfegelungs-trahlengang kann ein zusätzlicher Betrachter, beispielsweise ein Assistent, mit weiteren Bildinformationen versorgt werden.
• Dadurch, dass alle Blenden wahlweise getrennt oder wenigstens teilweise miteinander schaltbar sind, können beliebige Kombinationen von Objektabbild, Ausspiegelung und Einspiegelung erzeugt werden.
• Durch die Möglichkeit zwischen einem elektronisch erzeugten Einspiegelungs-Signal und einem beliebigen Video-Signal zu wechsein, bzw. zu kombinieren, wird eine hohe Flexibilität der eingespiegelten Informationen möglich.
• Durch den Einsatz einer erfindungsgemäßen Blendenkonstruktion In den Hauptstrahlengängen wird der konstruktive Aufwand reduziert.
• Durch den Einsatz einer Override-Funktion wird ein Quick-Reset der jeweiligen Blende in den Hauptstrahlengängen möglich, so dass ein Betrachter unverzüglich freien Blick auf das Objekt erhält, unabhängig von der momentan gewählten Blendenstellung.

Im vorliegenden Text wird zwar auf einen Chirurgen und auf ein Operationsmikroskop Bezug genommen; die Erfindung ist jedoch nicht darauf eingeschränkt.

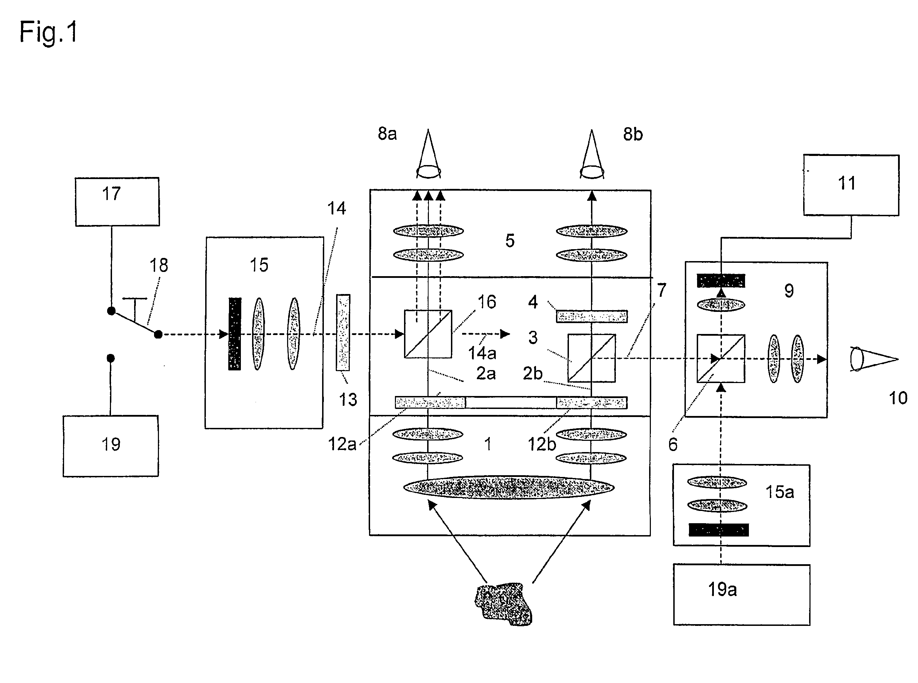

Die Bezugszeichenliste und die Fig.1, Fig.2 und Fig.3 sind zusammen mit den in den Ansprüchen beschriebenen, beziehungsweise geschützten Gegenständen integrierender Bestandteil der Offenbarung dieser Anmeldung.

### Figurenbeschreibung

Die Figuren werden zusammenhängend und übergreifend beschrieben. Gleiche Bezugszeichen bedeuten gleiche Bautelle, Bezugszeichen mit unterschiedlichen Indizes geben funktionsgleiche Bauteile an.
- Fig.1: Symbolischer Gesamtaufbau einer optischen Betrachtungselnrichtung, beispielsweise eines Stereo-Operationsmikroskops, mit Ein- und Aussplegelungs-Strahlengängen;
- Fig.2: schematische Draufsicht-Darstellung einer Blende mit Quick-Reset Funktion und
- Fig.3: schematische Seitenansicht der in Fig.2 dargestellten Blende.

Die Fig.1 zeigt symbolisch den Gesamtaufbau einer optischen Betrachtungseinrichtung mit einem Hauptobjektiv 1, einem linken und rechten Strahlengang 2a, 2b, einer Blende 12a, 12b, einem Aussplegelungs-Sahlenteiler 3 im rechten Strahlengang 2b und einer erfindungsgemäß zusätzlichen Blende 4 im Hauptstrahlengang 2b, angeordnet im rechten Strahlengang 2b zwischen dem Ausspiegelungs-Strahlenteiler 3 und dem Betrachter-Okular 5. Im Weiteren werden der ausgespiegelte Strahlengang 7, ein Strahlenteiler 6 Im ausgespiegelten Strahlengang, ein Anschluss 9 auf einen zusätzlichen Betrachter 10, bzw. eine elektronische Betrachtungseinheit 11, beispielsweise ein Video-System, dargestellt. Zusätzlich werden die für eine Einspisgelung notwendige Einspiegelungs-Vorrichtung 15, ein erfindungsgemäß zusätzliches Video-Signal 17, ein elektronisch erzeugtes Einspiegelungs-Signal 19, ein Umschalter 18, eine Blende Im eingespiegelten Strahlengang 13 sowie ein Einsplegelungs-Strahlenteiler 16 im linken Hauptstrahlengang 2a dargestellt. Die symbolischen Darstellungen bedeuten keine Einschränkung. Insbesondere können, im linken wie Im rechten Hauptstrahiengang 2a, 2b, Aus- und Einspiegelungs-Strahlengänge 7, 14 von der angegebenen Bauart und dem angegebenen Zweck eingesetzt sein.

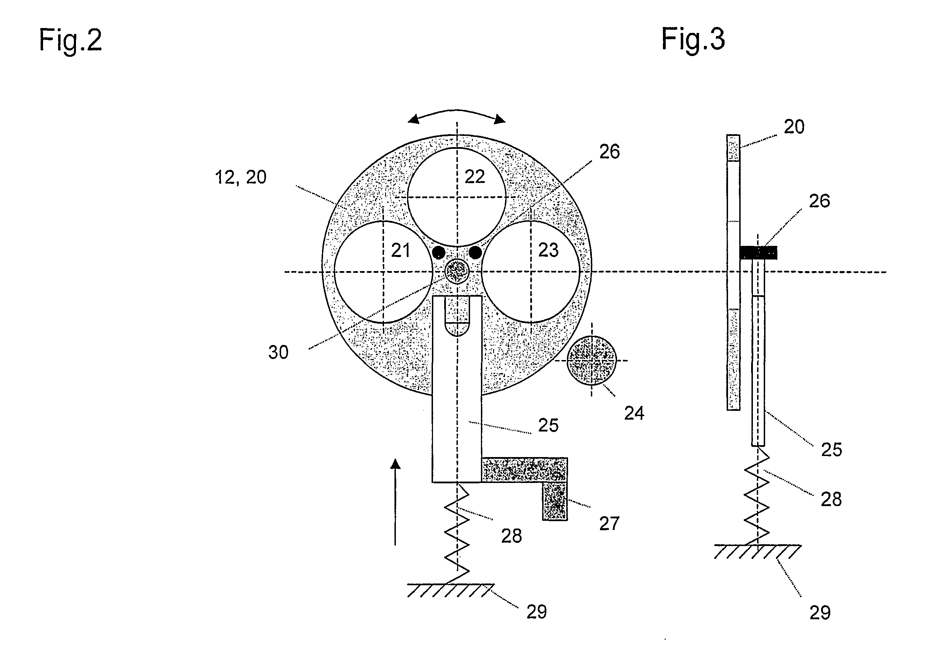

Die Fig.2 zeigt eine erfndungsgemäße Blendenkonstruktion 12 mit Override-Funktion (Quick-Reset) in Draufsicht, basierend auf einer um eine Achse 30 drehbaren Blendenscheibe 20 mit drei Aussparungen 21, 22, 23, und einem Getriebe 24, beispielsweise einem Ritzel, das mit einem Motor verbunden ist, zur Ansteuerung der Blendenscheibe 20. Zusätzlich werden der Hebel 25 für Override-Funktion mit Drucktaste 27, die Rückstellfeder 28 und das Gehäuse 29 dargestellt. In den Aussparungen 21, 22, 23, können bei Bedarf auch Filterscheiben eingesetzt sein, so dass dieser Aufbau auch als Override-Aufbau für Filterräder einsetzbar ist.

Fig.3 zeigt die in Fig.2 dargestellte Blandenkonstruktion in Seitenansicht Zusätzlich werden erfindungsgemäß die für die Ovorride-Funktion notwendigen Elemente, der verschiebbare Hebel 25 und die in einem 90 Grad-Winkel angeordneten Nocken 26 abgebildet.

### Funktionsweise

Das vom Objekt abgebildete Licht im rechten Hauptstrahlengang 2b wird über ein Hauptobjektiv 1, eine speziell konstruierte Blende 12, einen Ausspiegelungs-Strahlenteiler 3 und eine erfindungsgemäß zusätzliche Blende 4 durch das Betrachter-Okular 5 zum Betrachter 8b geieltet. Der ausgespiegelte Strahlengang 7 wird Ober einen Strahlenteiler 6 auf den Anschluss 9 zu einem zusätzlichen Betrachter 10, beispielsweise einem Assistenten, und/oder auf eine elektronische Betrachtungseinheit 11, beispielsweise ein Video-System gelenkt. Durch die spezielle Anordnung der Blende 4 im Hauptstrahlengang 2b zwischen dem Strahlenteiler 3 und dem Betrachter-Okular 5 wird es erfindungsgemäß möglich, den Betrachter 8b zu-bzw. wegzuschalten, ohne das ausgespiegelte Signal 7 zu beeinflussen.

Das eingespiegelte Signal 14 wird erfindungsgemäß wahlweise und/oder über den Schalter 18, beispielsweise ein Prisma, durch ein beliebiges Video-Signal 17, beispielsweise die Objekt-Abbildung, oder ein elektronisches Einspiegelungs-Signal 19 erzeugt. Dieses wird über eine Einspiegelungs-vorrichtung 15, eine Blende 13 mittels eines Einspiegelungs-Strahlenteilers 16 in den linken Hauptstrahlengang 2a eingespiegelt

Die erfindungsgemäß speziell konstruierte Blende 12 in den Hauptstrahlengängen 2a, 2b ermöglicht einerseits eine einfache mechanische Konstruktion, andrerseits eine Override-Funktion (Quick-Reset). Mittels dieser Funktion sieht der Betrachter 8 bei Bedarf innerhalb kürzester Zeit das gesamte Objektabbild, da die Blende durch Tastendruck mechanisch in die ResetPosition gebracht wird.

Die erfindungsgemäß drehbare Blendenscheibe 20 schließtie nach Drehwinkel den linken Strahlengang 2a oder den rechten Strahlengang 2b. Sie wird über ein Getriebe 24, beispielsweise über ein Ritzel mit elektrisch und/oder elektronisch angesteuertem Elektromotor, angetrieben.

Durch Druck auf die Taste 27 des verschiebbaren Hebels 25 wird erfindungsgemäß über die beiden in 90 Grad-Stellung angebrachten Nocken 26 die Blendenscheibe 20 innerhalb kürzester Zeit in die dargestellte Ausgangsstellung geschwenkt und damit beide Strahlangänge 2a, 2b geöffnet.

### Bezugszeichenliste

- 1: Hauptobjektiv
- 2: Linker / Rechter Hauptstrahlengang
- 3: Ausspiegelungs-Strahlenteiler im Hauptstrahlengang
- 4: Blende im Hauptstrahlengang
- 5: Betrachter-Okular
- 6: Strahlenteiler im ausgespiegelten Strahlengang
- 7: Ausgespiegelter Strahlengang / ausgespiegeltes Signal
- 8: Haupt-Betrachter
- 9: Anschluss im ausgespiegelten Strahlengang
- 10: Zusätzlicher Betrachter, beispielsweise Assistent
- 11: Elektronische Betrachtungseinheit, beispielsweise Video-System
- 12: Blende im Hauptstrahlengang
- 13: Blende im eingespiegelten Strahlengang
- 14: Eingespiegelter Strahlengang / Stereo-Signal für beide Strahlengänge
- 15: Einspiegelungsvorrichtung Haupt-Betrachter
- 15a: Einspiegelungs-Vorrichtung zusätzlicher Betrachter
- 16: Einspiegelungs-Strahlenteiler im Hauptstrahlengang
- 17: Video-Signal
- 18: Schalter elektronisch erzeugtes / Video-Signal
- 19: Elektronisch erzeugtes Einspiegelungs-Signal für Haupt-Betrachter
- 19a: Elektronisch erzeugtes Signal für zusätzlichen Betrachter
- 20: Drehbare Blendenscheibe
- 21: Aussparung
- 22: Aussparung
- 23: Aussparung
- 24: Getriebe
- 25: Hebel für Override-Funktion
- 26: Nocken für Override-Funktion
- 27: Drucktaste
- 28: Zugfeder
- 29: Gehäuse
- 30: Drehachse

## Patentansprüche

1. Mikroskop mit einem Hauptobjektiv (1), einem linken und einem rechten Hauptstrahlengang (2a, 2b) und mit wenigstens einem Ausspiegelungs-Strahlengang (7) und mit wenigstens einem Ausspiegelungs-Strahlenteiler (3) im Hauptstrahlengang (2b) für das Ausspiegeln des Objekt-Abbildes und einem Betrachter-Okular (5) für einen Betrachter (8), **dadurch gekennzeichnet, dass** eine nach den Wünschen des Betrachters (8) bedienbare Blende (4) im Hauptstrahlengang (2b) zwischen dem Strahlenteiler (3) und dem Betrachter-Okular (5) zur Schließung des Hauptstrahlengangs (2b) angeordnet ist **und dass** eine nach den Wünschen des Betrachters (8) bedienbare Blende (12) in wenigstens einem der Hauptstrahlengänge (2a, 2b) zwischen Hauptobjektiv (1) und den Strahlenteilern (3,16) angeordnet ist **und dass** das Mikroskop eine Quick-Reset-Schaltung umfasst, durch die alle Blenden in den Zustand freier Sichtbarkeit des Objekt-Abbildes durch beide Hauptstrahlengänge (2a, 2b) rückversetzt werden können.

2. Mikroskop nach Anspruch 1, **dadurch gekennzeichnet, dass** ein Einspiegelungs-Strahlengang (14) vorgesehen ist, der über einen Einspiegelungs-Strahlenteiler (16) in wenigstens einen der Hauptstrahlengänge (2a, 2b) einspiegelbar ist und eine nach den Wünschen des Betrachters (8) bedienbare Einspiegelungs-Blende (13) im eingespiegelten Strahlengang (14) angeordnet ist.

3. Mikroskop nach Anspruch 2, **dadurch gekennzeichnet, dass** alle Blenden (4, 12, 13) getrennt schaltbar sind.

4. Mikroskop nach Anspruch 2, **dadurch gekennzeichnet, dass** ein Teil der Blenden (4, 12, 13) miteinander schaltbar sind.

5. Mikroskop nach einem der Ansprüche 2 - 4, **dadurch gekennzeichnet dass** zwischen der Blende (12) und dem Okular (5) eine Einspiegelungsvorrichtung (15) zur Anzeige eines Videobildes angeordnet ist

6. Mikroskop nach einem der Ansprüche 2 - 5, **dadurch gekennzeichnet, dass** wenigstens eine der Blenden (4, 12, 13) manuell oder motorisch fernbedienbar ist

7. Mikroskop nach einem der vorhergehenden Ansprüche, **dadurch gekennzeichnet, dass** im ausgespiegelten Strahlengang (7) ein Anschluss (9) für einen weiteren Betrachter (10) angeordnet ist.

8. Mikroskop nach Anspruch 7, **dadurch gekennzeichnet, dass** im ausgespiegelten Strahlengang (7) der Anschluss (9) für eine elektronische Betrachtungseinheit (11), beispielsweise ein Video-Aufnahmesystem, angeordnet ist

9. Mikroskop nach einem der vorhergehenden Ansprüche, **dadurch gekennzeichnet, dass** eine Einspiegelungsvorrichtung (15a) mit einem Einspiegelungs-Strahlenteiler (6) im ausgespiegelten Strahlengang (7) angeordnet ist.

10. Mikroskop nach einem der Ansprüche 2 - 9, **dadurch gekennzeichnet, dass** über einen Schalter (18), beispielsweise ein Prisma, wahlweise ein elektronisch erzeugtes Einspiegelungs-Signal (19) oder ein Videosignal (17), beispielsweise das Objekt-Abbild, einspiegelbar ist

11. Mikroskop nach einem der Ansprüche 2 - 10, **dadurch gekennzeichnet, dass** die Einspiegelung als Stereobild-Signal (14, 14a) in beide Hauptstrahlengänge (2a, 2b) einspiegelbar ist

12. Mikroskop nach Anspruch 10, **dadurch gekennzeichnet, dass** der Schalter (18) elektronisch und / oder manuell ansteuerbar ist.

13. Mikroskop nach einem der Ansprüche 2 - 12, **dadurch gekennzeichnet, dass** wenigstens eine der Blenden (4, 12, 13) als drehbare Blendenscheibe (20) mit insbesondere drei Aussparungen (21, 22, 23) zur Freigabe, bzw. Sperrung des linken (2a), bzw. des rechten (2b) Hauptstrahlengangs ausgebildet ist

14. Mikroskop nach Anspruch 13, **dadurch gekennzeichnet, dass** die Blendenscheibe (20) elektromotorisch antreibbar ist

15. Mikroskop nach einem der Ansprüche 2 - 14, **dadurch gekennzeichnet, dass** wenigstens eine der Blenden (4, 12, 13) elektronisch oder manuell ansteuerbar ist.

16. Mikroskop nach einem der vorhergehenden Ansprüche, **dadurch gekennzeichnet, dass** die Blende (12) mittels eines Hebels (25), der über zwei Nocken (26) die Blendenscheibe (20) ansteuert, aus jeder Position durch Betätigung einer Drucktaste (27) in die Ausgangsstellung zurückstellbar ist

17. Mikroskop nach Anspruch 16, **dadurch gekennzeichnet, dass** der Hebel (25) über die Drucktaste (27) manuell oder elektromechanisch betätigbar ist

18. Mikroskop nach einem der vorhergehenden Ansprüche, **dadurch gekennzeichnet, dass** es ein Stereo-Operationsmikroskop ist

## Claims

1. Microscope, having a main lens (1), a left and a right main beam path (2a, 2b) and having at least one output-reflection beam path (7) and having at least one output-reflection beam splitter (3) in the main beam path (2b) for the output reflection of the object image, and an observer eyepiece (5) for an observer (8), **characterised in that** a shutter (4) controllable for the requirements of the observer (8), for the closure of the main beam path (2b), and **in that** is arranged in the main beam path (2b) between the beam splitter (3) and the observer eyepiece (5) a shutter (12), controllable for the requirements of the observer (8), is arranged in at least one of the main beam paths (2a, 2b) between the main lens (1) and the beam splitters (3, 16), and **in that** the microscope comprises a quick reset switching unit, with which all the shutters can be reset to the clear visibility state of the object image through both main beam paths (2a, 2b).

2. Microscope according to Claim 1, **characterised in that** an input-reflection beam path (14) is provided, which can be reflected via an input-reflected beam splitter (1b) into at least one of the main beam paths (2a, 2b), and an input-reflected shutter (13), controllable for the requirements of the observer (8), is arranged in the input-reflected beam path (14).

3. Microscope according to one of the preceding claims, **characterised in that** all shutters (4, 12, 13) can be switched separately.

4. Microscope according to Claim 2, **characterised in that** some of the shutters (4, 12, 13) can be switched with one another.

5. Microscope according to one of Claims 2-4, **characterised in that** an input-reflection device (15) for displaying a video image is arranged between the shutter (12) and the eyepiece (5).

6. Microscope according to one of Claims 2-5, **characterised in that** at least one of the shutters (4, 12, 13) can be remote-controlled manually or using a motor.

7. Microscope according to one of the preceding claims, **characterised in that** a connection (9) for a further observer (10) is arranged in the output-reflected beam path (7).

8. Microscope according to Claim 7, **characterised in that** a connection (9) for an electronic observation unit (11), for example a video recording system, is arranged in the output-reflected beam path (7).

9. Microscope according to one of the preceding claims, **characterised in that** an input-reflection device (15a) having an input-reflection beam splitter (6) is arranged in the output-reflected beam path (7).

10. Microscope according to one of Claims 2-9, **characterised in that** an electronically generated input-reflection signal (19) or a video signal (17), for example the object image, can be reflected in selectively via a switch (18), for example a prism.

11. Microscope according to one of Claims 2-10, **characterised in that** the input reflection can be reflected into both main beam paths (2a, 2b) as a stereo-image signal (14, 14a).

12. Microscope according to Claim 10, **characterised in that** the switch (18) can be operated electronically and/or manually.

13. Microscope according to one of Claims 2-12, **characterised in that** at least one of the shutters (4, 12, 13) is designed as a rotatable shutter disc (20) having, in particular, three holes (21, 22, 23) for opening and closing the left (2a) or right (2b) main beam path, respectively.

14. Microscope according to Claim 13, **characterised in that** the shutter disc (20) can be operated using an electric motor.

15. Microscope according to one of Claims 2-14, **characterised in that** at least one of the shutters (4, 12, 13) can be operated electronically or manually.

16. Microscope according to one of the preceding claims, **characterised in that** the shutter (12) can be reset by means of a lever (25), which operates the shutter disc (20) via two cams (26), from any position to the starting position by actuating a button (27).

17. Microscope according to Claim 16, **characterised in that** the lever (25) can be actuated manually or electromechanically via a pushbutton (27).

18. Microscope according to one of the preceding claims, **characterised in that** it is a stereo surgical microscope.

## Revendications

1. Microscope avec un objectif principal (1), un trajet de faisceau principal à gauche et à droite (2a, 2b) et avec au moins un trajet de faisceau de sortie par réflexion (7) et avec au moins un séparateur de faisceau de sortie par réflexion (3) dans le trajet de faisceau principal (2b) pour la sortie par réflexion de l'image de l'objet et un oculaire d'observateur (5) pour un observateur (8), **caractérisé en ce qu'**un obturateur (4) pouvant être actionné selon les voeux de l'observateur (8), est disposé dans le trajet de faisceau principal (2b) entre le séparateur de faisceau (3) et l'oculaire d'observateur (5) pour fermer le trajet de faisceau principal (2b), et **en ce qu'**un obturateur (12) pouvant être actionné selon les voeux de l'observateur (8), est disposé dans au moins un des trajets de faisceaux principaux (2a, 2b) entre l'objectif principal (1) et les séparateurs de faisceaux (3, 16), et **en ce que** le microscope comporte un circuit de "quick reset" permettant de ramener tous les obturateurs dans l'état de parfaite visibilité de l'image de l'objet à travers les deux trajets de faisceaux principaux (2a, 2b).

2. Microscope selon la revendication 1, **caractérisé en ce qu'**il est prévu un trajet de faisceau d'entrée par réflexion (14) pouvant être injecté par réflexion par l'intermédiaire d'un séparateur de faisceau d'entrée par réflexion (16) dans au moins un des trajets de faisceaux principaux (2a, 2b) et un obturateur d'entrée par réflexion (13) pouvant être actionné selon les voeux de l'observateur (8) est disposé dans le trajet de faisceau d'entrée par réflexion (14).

3. Microscope selon la revendication 2, **caractérisé en ce que** tous les obturateurs (4, 12, 13) peuvent être actionnés séparément.

4. Microscope selon la revendication 2, **caractérisé en ce qu'**une partie des obturateurs (4, 12, 13) peuvent être actionnés ensemble.

5. Microscope selon une des revendications 2 - 4, **caractérisé en ce qu'**un dispositif d'entrée par réflexion (15) pour l'affichage d'une image vidéo, est disposé entre l'obturateur (12) et l'oculaire (5).

6. Microscope selon une des revendications 2 - 5, **caractérisé en ce qu'**au moins un des obturateurs (4, 12, 13) peut être actionné à distance manuellement ou au moyen d'un moteur.

7. Microscope selon une des revendications précédentes, **caractérisé en ce qu'**un raccordement (9) pour un autre observateur (10) est disposé dans le trajet de faisceau de sortie par réflexion (7).

8. Microscope selon la revendication 7, **caractérisé en ce que** le raccordement (9) est disposé dans le trajet de faisceau de sortie par réflexion (7) pour une unité d'observation électronique (11), par exemple un système d'enregistrement vidéo.

9. Microscope selon une des revendications précédentes, **caractérisé en ce qu'**un dispositif d'entrée par réflexion (15a) avec un séparateur de faisceau d'entrée par réflexion (6) est disposé dans le trajet de faisceau de sortie par réflexion (7).

10. Microscope selon une des revendications 2 - 9, **caractérisé en ce que,** par l'intermédiaire d'un commutateur (18), par exemple un prisme, il est possible d'injecter par réflexion au choix un signal d'entrée par réflexion (19) généré électroniquement ou un signal vidéo (17), par exemple l'image de l'objet.

11. Microscope selon une des revendications 2 - 10, **caractérisé en ce qu'**il est possible d'injecter par réflexion l'entrée par réflexion sous la forme d'un signal d'image stéréoscopique (14, 14a) dans les deux trajets de faisceaux principaux (2a, 2b).

12. Microscope selon la revendication 10, **caractérisé en ce que** le commutateur (18) peut être commandé électroniquement et/ou manuellement.

13. Microscope selon une des revendications 2 - 12, **caractérisé en ce qu'**au moins un des obturateurs (4, 12, 13) est réalisé sous la forme d'un disque obturateur rotatif (20) avec notamment trois évidements (21, 22, 23) pour ouvrir, respectivement pour fermer le trajet de faisceau principal de gauche (2a) respectivement de droite (2b).

14. Microscope selon la revendication 13, **caractérisé en ce que** le disque obturateur (20) peut être actionné par un moteur électrique.

15. Microscope selon une des revendications 2 - 14, **caractérisé en ce qu'**au moins un des obturateurs (4, 12, 13) peut être commandé électroniquement ou manuellement.

16. Microscope selon une des revendications précédentes, **caractérisé en ce que** l'obturateur (12) peut être ramené dans sa position de départ à partir de n'importe quelle position en actionnant une touche (27) au moyen d'un levier (25) qui commande le disque obturateur (20) par l'intermédiaire de deux cames (26).

17. Microscope selon la revendication 16, **caractérisé en ce que** le levier (25) peut être actionné manuellement ou de manière électromécanique au moyen d'une touche (27).

18. Microscope selon une des revendications précédentes, **caractérisé en ce qu'**il s'agit d'un microscope d'opération stéréoscopique.
